# EUROPÄISCHE PATENTSCHRIFT

(11) **EP 2 611 622 B1**
(45) Veröffentlichungstag und Bekanntmachung des Hinweises auf die Patenterteilung: **22.04.2015**
(21) Anmeldenummer: 11736098.2
(22) Anmeldetag: 27.07.2011
(51) Int. Cl.: B42D 15/00

(54) **WERT- UND/ODER SICHERHEITSDOKUMENT UND VERFAHREN ZU DESSEN HERSTELLUNG**
DOCUMENT OF VALUE AND/OR SECURITY DOCUMENT AND METHOD FOR PRODUCING THE SAME
DOCUMENT DE VALEUR ET/OU DE SÉCURITÉ ET SON PROCÉDÉ DE FABRICATION

(30) Priorität: 30.08.2010 DE 102010035889
(43) Veröffentlichungstag der Anmeldung: 10.07.2013
(73) Patentinhaber: Bundesdruckerei GmbH, 10969 Berlin (DE)
(72) Erfinder: KNEBEL, Michael, 10405 Berlin (DE); SEIDEL, Rainer, 13467 Berlin (DE); KRÜGER, Per, 14197 Berlin (DE); LÖWE, Reinhard, 14542 Werder OT Phöben (DE); EHREKE, Jens, 12587 Berlin (DE); MOMBRÉE, Alexander, 10829 Berlin (DE); BUCHHOLZ, Jörg, 10367 Berlin (DE)
(74) Vertreter: Bressel, Burkhard
(86) Internationale Anmeldenummer: PCT/EP2011/062866
(87) Internationale Veröffentlichungsnummer: WO 2012/031825

(56) Entgegenhaltungen:
- WO-A1-03/035388
- WO-A1-2009/056355
- WO-A2-2004/028825

## Beschreibung

### Gebiet der Erfindung

Gegenstand der Erfindung ist ein Verfahren zur Herstellung eines Wert- und/oder Sicherheitsdokuments mit einem Sicherheitsfaden vorzugsweise in einem kontinuierlichen Verfahren sowie ein Wert- und/oder Sicherheitsdokument.

### Stand der Technik

Aus dem Stand der Technik sind Wert- und/oder Sicherheitsdokumente mit einem Sicherheitsfaden bekannt. Ein Sicherheitsfaden besteht im Regelfall aus einem polymeren Träger, welcher ein- oder beidseitig mit Metall beschichtet ist. Teilbereiche des Sicherheitsfadens sind demetallisiert, sodass der Sicherheitsfaden insbesondere im Durchlicht verifiziert werden kann. Derartige Wert- und/oder Sicherheitsdokumente können aus Papier oder Kunststoff bestehen. Bei vielen Banknoten ist zum Beispiel ein solcher Sicherheitsfaden in das Papier eingebracht, wobei die Einbringung bei der Herstellung des Papiers erfolgt. Als Beispiel für ein Kunststoff-basiertes Wert- und/oder Sicherheitsdokument sei der deutsche Führerschein im ID1-Format genannt. Anders als bei Papier-basierten Dokumenten erfolgt die Einbringung eines Sicherheitsfadens in ein Kunststoff-basierendes Dokument dadurch, dass der Sicherheitsfaden auf eine Kunststofffolie aufgebracht wird, welche mit weiteren Kunststofffolien laminiert wird. Hierbei werden zunächst die Folien im Bogenformat mit einem Sicherheitsdruck versehen. Anschließend wird der Sicherheitsfaden auf der Seite der Folie durch Kleben aufgebracht, auf der sich der Sicherheitsdruck befindet. Hierzu ist der Sicherheitsfaden mit einem so genannten Hotmelt-Kleber beschichtet. Hotmelt-Kleber erweichen bei Erhöhung der Temperatur und erzeugen so eine Verbindung zwischen der bedruckten Folie und dem Sicherheitsfaden. Die bedruckten und mit Sicherheitsfaden versehenen Folien werden mit weiteren Folien zusammen getragen und laminiert. Hierbei wird der Sicherheitsfaden derart angeordnet, dass sich oberhalb des Sicherheitsfadens nur eine sogenannte Overlay-Folie befindet. Diese Folie ist transparent und weist eine Dicke von typischer Weise etwa 50 µm auf. Es hat sich gezeigt, dass dadurch ein "Verschwimmen", also ein Wegbewegen des Sicherheitsfadens von der Position, in welcher dieser mit dem Hotmelt-Kleber fixiert ist, verhindert werden kann. Nach dem Laminieren werden die kartenförmigen Dokumente aus dem Laminat ausgestanzt. Vorteil des Verfahrens ist es, dass der Sicherheitsfaden leicht zu verifizieren ist und bei dem Versuch, den Sicherheitsfaden aus dem Dokument zu entfernen, der Druck unter dem Sicherheitsfaden beschädigt wird und so die versuchte Manipulation angezeigt wird.

WO 2009 / 056 355 A1 offenbart ein Verfahren gemäß dem Oberbegriffs des Anspruchs 1.

### Problem nach dem Stand der Technik und Aufgabe der Erfindung

Für eine schnelle und kostengünstigere Herstellung von Wert- und/oder Sicherheitsdokumenten werden heute bevorzugt kontinuierliche Verfahren eingesetzt, bei welchen die Folien nicht im Bogenformat zusammengetragen werden, sondern von der Rolle zugeliefert werden. Da nach der Lamination ein Laminat erhalten wird, welches eine typische Dicke von etwa 800 µm aufweist, muss eine Auftrennung des Laminats in kleinere Einheiten, zum Beispiel durch Ausstanzen der fertigen Dokumente, erfolgen. Alternativ kann das Laminat zunächst in Streifen mit 4 oder 5 Nutzen aufgetrennt werden, aus welchen die fertigen Dokumente in einem weiteren Prozessschritt ausgestanzt werden. Ein erneutes Aufrollen (Rolle-zu-Rolle-Prozess) ist nicht möglich, da das Laminat eine zu große Steifigkeit aufweist. Beim kontinuierlichen Prozess ergibt sich jedoch das Problem, dass der Sicherheitsfaden nicht mehr wie bisher direkt vor der Lamination auf eine mit einem Sicherheitsdruck bedruckte Folie aufgebracht werden kann, da dieses durch die Prozessführung mit dem Hotmelt-Kleber nicht möglich ist. Weiter ist in einem derartigen kontinuierlichen Verfahren auch nur eine Zuführung in Laufrichtung der Folienbahn möglich, sodass eine Ausrichtung des Sicherheitsfadens senkrecht hierzu nicht möglich ist. Aus diesen Gründen wird der Sicherheitsfaden zunächst auf eine transparente Folie aufgebracht. Diese wird dann im kontinuierlichen Prozess mit weiteren, teilweise bedruckten Folien zusammengeführt und laminiert.

Hierdurch ergibt sich nun der Nachteil, dass der Sicherheitsfaden aus dem Dokument leicht entfernt werden kann, ohne dass die Entfernung des Sicherheitsfadens durch eine Beschädigung des Sicherheitsdrucks offensichtlich wird. Denn zum einen ermöglichen die metallischen Bereiche des Sicherheitsfadens keine befriedigende Haftfestigkeit zur angrenzenden Folie, zum anderen weist das Material des Träger-Kunststoffes des Sicherheitsfadens oftmals keine oder nur eine sehr geringe Kompatibilität zum Kunststoff des Dokuments auf. Insbesondere bestehen Sicherheitsfäden aus Polyethylenterephthalat (PET), die Dokumente auf Basis Bisphenol A Polycarbonat (PC). Diese beiden Kunststoffe weisen keine vollständige Löslichkeit ineinander auf, was dazu führt, dass diese bei einer Lamination keine untrennbare Verbindung miteinander eingehen.

Es stellt sich somit die Aufgabe, ein Wert- und/oder Sicherheitsdokument sowie ein Verfahren zu dessen Herstellung zu schaffen, welches gegen die Manipulation des Sicherheitsfadens gesichert ist.

Beschreibung der Erfindung und bevorzugte Ausführungsformen

Die Aufgabe wird durch das Verfahren gemäß Anspruch 1 sowie das Wert- und/oder Sicherheitsdokument gemäß Anspruch 5 gelöst. Bevorzugte Ausführungsformen der Erfindung sind in den Unteransprüchen angegeben.

Das erfindungsgemäße Verfahren zur Herstellung eines Wert- und/oder Sicherheitsdokuments umfasst die Verfahrensschritte:
a) Bereitstellen wenigstens einer ersten, wenigstens einer zweiten, wenigstens einer dritten und wenigstens einer vierten Folie in Rollenform, wobei als die wenigstens eine erste, die wenigstens eine zweite und die wenigstens eine dritte Folie transparente Folien ausgewählt werden und als wenigstens eine vierte Folie eine opake Folie ausgewählt wird, wobei die wenigstens eine zweite Folie mit wenigstens einer Druckschicht bedruckt ist; die wenigstens eine dritte Folie weist vorzugsweise keine Druckschicht auf; die wenigstens eine erste Folie kann jeweils wenigstens eine Druckschicht aufweisen, oder Druckschichten können sich nur auf einzelnen der wenigstens einen ersten Folie befinden oder auf gar keiner,
b) Zusammenführen der wenigstens einen ersten, der wenigstens einen zweiten, der wenigstens einen dritten und der wenigstens einen vierten Folie zu einem Folienstapel, wobei die wenigstens eine dritte Folie zwischen der wenigstens einen zweiten und der wenigstens einen vierten Folie angeordnet wird,
c) Laminieren des Folienstapels mittels Druck und/oder Wärme zu einem Laminat und
d) Vereinzeln des Wert- und/oder Sicherheitsdokuments aus dem Laminat.

Vor dem Zusammenführen in Verfahrensschritt b) wird wenigstens ein Sicherheitsfaden über einen Kleber auf die wenigstens eine dritte Folie aufgebracht, wobei der Sicherheitsfaden entweder auf die Seite der wenigstens einen dritten Seite aufgeklebt wird, die der wenigstens einen zweiten Seite zugewandt ist, oder auf die Seite, die von der wenigstens einen zweiten Seite abgewandt ist. Der Kleber kann insbesondere ein Hotmelt-Kleber sein. Vorzugsweise ist der Sicherheitsfaden bereits vor dem Bereitstellen der Folien gemaß Verfahrensschritt a) auf die wenigstens eine dritte Folie aufgebracht, d.h. in Verfahrensschritt a) wird auch wenigstens eine mit dem Sicherheitsfaden versehene dritte Folie bereitgestellt.

Das nach dem Verfahren hergestellte Wert- und/oder Sicherheitsdokument ist derart aufgebaut, dass die wenigstens eine vierte Folie eine opake Innenlage sowie gegebenenfalls die Rückseite des Dokuments bildet, sofern keine weiteren Folien verwendet werden. Über der opaken Innenlage beziehungsweise der Rückseitenlage ist die wenigstens eine dritte Folie angeordnet, welche über den Hotmelt-Kleber mit dem Sicherheitsfaden verbunden ist. Darüber ist die wenigstens eine zweite Folie angeordnet, welche den Sicherheitsdruck aufweist. Über der bedruckten wenigstens einen zweiten Folie ist die wenigstens eine erste Folie angeordnet. Bei der wenigstens einen ersten Folie kann es sich bevorzugt um eine transparente Deckfolie handeln, besonders bevorzugt beträgt die Dicke der wenigstens einen ersten Folie 20 bis 60 µm. Bei der wenigstens einen zweiten Folie kann es sich auch um eine so genanntes Transparent KINEGRAM Overlay (TKO) oder eine ein Volumenhologramm enthaltene Folie handeln.

Ein Sicherheitsfaden besteht aus einem polymeren Trägermaterial und wenigstens einer Metallschicht, wobei die Metallschicht zur Erzeugung von Schrift, Negativschrift oder anderen Zeichen in Teilbereichen entfernt sein kann. Ferner kann ein Sicherheitsfaden ein Reflexionshologramm aufweisen. Dieses wird durch die Strukturierung der Grenzfläche der Metallschicht erzeugt. Insbesondere kann der Sicherheitsfaden hierzu weitere Lackschichten aufweisen. Zusätzlich oder alternativ kann das polymere Trägermaterial des Sicherheitsfadens ein Volumenhologramm aufweisen. Ein Sicherheitsfaden kann zur Individualisierung und/oder Personalisierung zum Beispiel mittels Laserstrahl modifiziert werden. Ein Sicherheitsfaden weist typischer Weise eine Breite von 1 bis 20 mm, insbesondere von 4 bis 12 mm, auf. Der Sicherheitsfaden kann zusätzlich ein zweites polymeres Trägermaterial aufweisen, um die Stabilität des Sicherheitsfadens und dessen Verarbeitung zu verbessern.

Vorteil des erfindungsgemäßen Verfahrens ist es, dass durch die Anordnung des Sicherheitsfadens unter wenigstens einer Folie, welche einen Druck aufweist, ein Entfernen des Sicherheitsfadens nicht möglich ist, ohne den Druck zu beschädigen und so eine Manipulation offensichtlich werden zu lassen. Dies gilt sowohl für den Fall, dass sich der Druck auf der Seite der wenigstens einen zweite Folie befindet, die mit der wenigstens einen dritten Folie in Kontakt steht, sodass der Druck mit dem Sicherheitsfaden in Kontakt stehen kann, wenn der Sicherheitsfaden auf der der wenigstens einen dritten Folie zugewandten Seite aufgebracht ist, als auch für den Fall, dass sich der Druck auf der von der wenigstens einen dritten Folie abgewandten Seite der wenigstens einen zweiten Folie befindet. Dieser Vorteil wird dadurch erreicht, dass ein potentieller Fälscher die wenigstens eine erste und die wenigstens eine zweite Folie durchtrennen muss, damit dieser an den Sicherheitsfaden gelangen kann. Hierbei wird der Sicherheitsdruck auf der wenigstens einen zweiten Folie zwangsweise beschädigt. Eine Manipulation von der Rückseite, also durch die wenigstens eine vierte Folie, ist nicht sinnvoll, da zum einen Sicherheitsmerkmale, welche sich auf der Rückseite des Dokuments befinden können, zerstört werden würden. Zum anderen müsste in diesem Fall der größte Teil des Materials abgetragen werden, sodass der verbleibende Rest, welcher nur noch aus der wenigstens einen ersten und der wenigstens einen zweiten Folie besteht zu instabil ist, als dass eine erfolgreiche Rekonstruktion eines verfälschten Dokuments möglich ist. Durch das Aufkleben des Sicherheitsfadens auf die wenigstens eine dritte Folie mittels des Hotmelt-Klebers wird eine sehr gute Haftfestigkeit mit dieser Folie erreicht, sodass auch ein seitliches Herausziehen des Sicherheitsfadens nicht mehr möglich ist, ohne diese Folien und auch die anderen Folien zu beschädigen. Dies ergibt sich insbesondere auch deshalb, weil die Folien, insbesondere die wenigstens eine zweite und die wenigstens eine dritte Folie und ganz besonders die wenigstens eine zweite Folie, besonders dünn ist, beispielsweise weniger als 50 µm dick. Der Sicherheitsfaden selbst hat vorzugsweise eine Dicke von etwa 20 bis 30 µm. Die Einbringung des Sicherheitsfadens in das Innere des Dokuments ist deshalb mittels des erfindungsgemäßen Verfahrens möglich, da der Sicherheitsfaden zunächst mit einem Hotmelt-Kleber auf die wenigstens eine dritte Folie aufgebracht ist. Es hat sich nun gezeigt, dass durch die Zuführung der wenigstens einen dritten Folie in Rollenform ein "Verschwimmen" des Sicherheitsfadens verhindert wird, auch wenn dieser im Vergleich zum Stand der Technik tiefer in das Dokument eingebettet wird. Weiter ermöglicht das erfindungsgemäße Verfahren weiter auch eine Einbringung eines Sicherheitsfadens, welcher nicht parallel zur Laufrichtung der Folienbahnen eingebracht ist, da der Sicherheitsfaden in beliebigem Winkel auf die wenigstens eine dritte Folie aufgebracht werden kann, bevor sie mit den anderen Folien in Verfahrensschritt b) zusammengeführt wird.

Die Folien können aus gleichen oder verschiedenen Materialien bestehen, insbesondere aus Polycarbonat (PC), insbesondere Bisphenol-A-Polycarbonat, Polyethylenterephthalat (PET), deren Derivaten wie Glykol-modifiziertem PET (PETG), Polyethylennaphthalat (PEN), Polyvinylchlorid (PVC), Polyvinylbutyral (PVB), Polymethylmethacrylat (PMMA), Polyimid (PI), Polyvinylalkohol (PVA), Polystyrol (PS), Polyvinylphenol (PVP), Polypropylen (PP), Polyethylen (PE), thermoplastischen Elastomeren (TPE), insbesondere thermoplastischem Polyurethan (TPU), Acrylnitril-Butadien-Styrol (ABS), Papier, Teslin^{®} sowie deren Derivaten, koextrudierten Folien, welche unter anderen diese Materialien enthalten, sowie Hybridmaterialien, welche unter anderen die oben genannten Materialien enthalten. Besonders bevorzugt sind Wert- und/oder Sicherheitsdokumente, welche zumindest teilweise aus Polycarbonat bestehen.

Beispiele für Wert- und/oder Sicherheitsdokumente sind Reisepass, Personalausweis, Führerschein, Fahrzeugschein, Fahrzeugbrief, Visum, Scheck- und Kreditkarte, Schecks, Firmenausweis, Berechtigungsnachweis, Mitgliedsausweis, Geschenk- und Einkaufsgutschein sowie (Spiel-)Jeton. Besonders bevorzugt entspricht das Wert- und/oder Sicherheitsdokument dem ID-1 oder ID-2 Format gemäß ISO 7810 sowie der Datenseite eines Dokuments im ID-3 Format gemäß ISO 7810.

In einer bevorzugten Ausführungsform des erfindungsgemäßen Verfahrens wird vor dem Verfahrensschritt b), insbesondere bereits vor Verfahrensschritt a), jedenfalls aber nach dem Aufbringen des Sicherheitsfadens auf die wenigstens eine dritte Folie über den Hotmelt-Kleber, ein latent reaktiver Kleber auf den auf der wenigstens einen dritten Folie aufgeklebten Sicherheitsfaden aufgedruckt. Besonders bevorzugt erfolgt das Aufdrucken des latent reaktiven Klebers mittels Flexo-Druck.

Unter einem latent reaktiven Kleber wird im Sinne der Erfindung ein Kleber verstanden, welcher mittels einer chemischen Reaktion vernetzt wird. Der Start der Vernetzungsreaktion kann durch Bestrahlung mit Strahlung im UV-Bereich, im sichtbaren Spektralbereich und/oder im IR-Bereich und/oder durch Erwärmung erfolgen. Besonders bevorzugt handelt es sich bei der Vernetzungsreaktion um eine radikalische, anionische oder kationische Polymerisation. Die radikalische Polymerisation wird durch einen Radikalstarter initiiert. Beispielsweise handelt es sich bei dem latent reaktiven Kleber um einen Kleber auf Acrylat-Basis, insbesondere um einen Kleber auf Cyanacrylat-Basis oder auf MethacrylatBasis. Als Radikalstarter für Kleber können zum Beispiel Peroxide, insbesondere Dibenzoylperoxid, oder Azo-Verbindungen, insbesondere Azo-bis-(isobutyronitril) verwendet werden.

In einer weiteren bevorzugten Ausführungsform des erfindungsgemäßen Verfahrens wird die wenigstens eine zweite Folie derart angeordnet, dass die wenigstens eine Druckschicht der zweiten Folie beim Zusammenführen im Verfahrensschritt b) mit dem latent reaktiven Kleber auf dem Sicherheitsfaden in Kontakt gebracht wird. Hierdurch wird eine gute Haftfestigkeit zwischen dem Sicherheitsfaden und dem Sicherheitsdruck erreicht. Wird der Sicherheitsfaden aus dem Dokument entfernt, so wird auch der Sicherheitsdruck beschädigt und eine Manipulation dadurch offensichtlich.

In einer weiteren bevorzugten Ausführungsform des erfindungsgemäßen Verfahrens wird nach dem Verfahrensschritt b) der latent reaktive Kleber mittels Bestrahlung mit Strahlung im UV-Bereich, im sichtbaren Spektralbereich und/oder im IR-Bereich und/oder durch Erwärmung vernetzt. Besonders bevorzugt erfolgt eine Vernetzung mittels Bestrahlung mit Strahlung im UV-Bereich, im sichtbaren Spektralbereich und/oder im IR-Bereich vor oder nach dem Verfahrensschritt c) und/oder eine Vernetzung mittels Erwärmung während des Verfahrensschritts c).

Das erfindungsgemäße Wert- und/oder Sicherheitsdokument umfasst ein Laminat aus wenigstens einer ersten, wenigstens einer zweiten, wenigstens einer dritten und wenigstens einer vierten Folie. Die wenigstens eine erste, wenigstens eine zweite und wenigstens eine dritte Folie sind transparent, die wenigstens eine vierte Folie ist opak. Die wenigstens eine dritte Folie ist zwischen der wenigstens einen zweiten und der wenigstens einen vierten Folie angeordnet und die wenigstens eine zweite Folie weist wenigstens eine Druckschicht auf. Beispielsweise weist jede der zweiten Folien eine Druckschicht auf. Alternativ oder zusätzlich kann eine zweite Folie oder können einzelne, mehrere oder alle zweiten Folien je eine Druckschicht auf jeder Seite der zweiten Folien aufweisen, oder einige weisen eine Druckschicht nur auf einer Seite und andere je eine Druckschicht auf jeder der beiden Seiten auf. Das Dokument zeichnet sich dadurch aus, dass die wenigstens eine dritte Folie keine Druckschicht aufweist und dass zwischen der wenigstens einen zweiten und der wenigstens einen dritten Folie ein Sicherheitsfaden angeordnet ist sowie dass sich zwischen der wenigstens einen dritten Folie und dem Sicherheitsfaden eine Kleber-Schicht befindet. Die Kleber-Schicht kann insbesondere durch eine Hotmelt-Schicht gebildet sein.

In einer bevorzugten Ausführungsform des erfindungsgemäßen Wert- und/oder Sicherheitsdokuments befindet sich zwischen der wenigstens einen zweiten Folie und dem Sicherheitsfaden ein reaktiv vernetzter Kleber, sodass eine besonders gute Haftfestigkeit zwischen dem Sicherheitsfaden und der wenigstens einen zweiten Folie geschaffen wird.

In einer weiteren bevorzugten Ausführungsform des erfindungsgemäßen Wert- und/oder Sicherheitsdokuments ist die auf der wenigstens einen zweiten Folie angeordnete Druckschicht auf der dem Sicherheitsfaden zugewandten Seite angeordnet, sodass der Sicherheitsfaden mit der Druckschicht unmittelbar in Kontakt kommen kann.

In einer weiteren bevorzugten Ausführungsform des erfindungsgemäßen Wert- und/oder Sicherheitsdokuments ist in den Sicherheitsfaden eine individualisierte und/oder personalisierte Information eingebracht. Personalisierte Informationen sind Informationen, welche den Dokumententräger und/oder die Person oder Sache identifizieren, der der Dokumententräger zugeordnet ist. Diese umfassen unter anderen Name, Anschrift, Geburtsdatum, Staatsangehörigkeit, Fingerabdruck, Gesichtsbild, Ausstellungsdatum und Ablaufdatum. Individualisierte Informationen machen ein Dokument von anderen gleichartigen Dokumenten unterscheidbar. Diese umfassen unter anderen Seriennummer sowie Zufallsmuster.

Ausführungsbeispiele der Erfindung werden nun unter Bezugnahme auf die beigefügten Figuren beschrieben. Die einzelnen Figuren zeigen:
- Fig. 1:: eine schematische Darstellung eines erfindungsgemäßen Herstellungsverfahrens;
- Fig. 2:: einen schematischen Querschnitt durch einen Folienstapel und durch ein aus dem Folienstapel hergestelltes Dokument:
- Fig. 3:: eine schematische Darstellung des Bereichs des Sicherheitsfadens im Dokument im Querschnitt;
- Fig. 4:: eine schematische Darstellung des Bereichs des Sicherheitsfadens mit latent reaktivem Kleber im Dokument im Querschnitt.

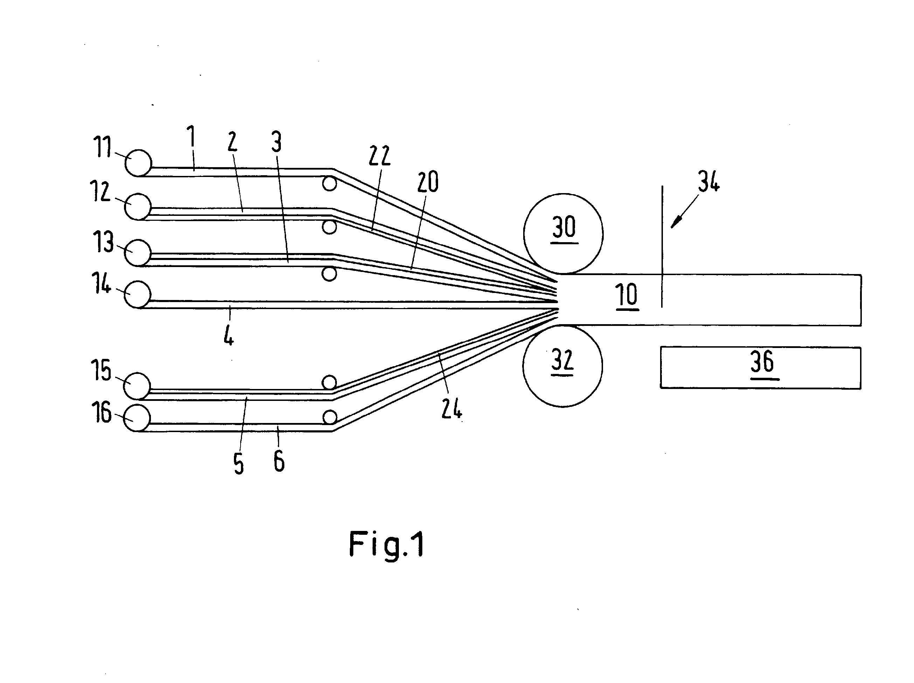

In Fig. 1 ist schematisch das Herstellungsverfahren dargestellt. Zunächst werden eine erste Folie 1, eine zweite Folie 2, eine dritte Folie 3, eine vierte Folie 4, eine fünfte Folie 5 und eine sechste Folie 6 bereitgestellt. Hierbei kommt die erste Folie 1 von einer ersten

Rolle 11, die zweite Folie 2 von einer zweiten Rolle 12, die dritte Folie 3 von einer dritten Rolle 13, die vierte Folie 4 von einer vierten Rolle 14, die fünfte Folie 5 von einer fünften Rolle 5 und die sechste Folie 6 von einer sechsten Rolle 16. Auf die dritte Folie 3 ist ein Sicherheitsfaden 20 mittels eines Hotmelt-Klebers aufgebracht. Der Sicherheitsfaden 20 kann wie hier dargestellt in Laufrichtung der Folie 3 und auf der Seite der dritten Folie aufgebracht sein, die der zweiten Folie 32 zugewandt ist. In alternativen Ausführungsformen ist denkbar, dass eine Vielzahl von Sicherheitsfäden 20 quer zur Laufrichtung aufgebracht sind. Die zweite Folie 2 ist mit einer Druckschicht 22 bedruckt und zwar auf der Seite der zweiten Folie, die der dritten Folie 3 zugewandt ist, und die fünfte Folie 5 ist mit einer Druckschicht 24 bedruckt und zwar auf der Seite der Folie, die der vierten Folie 4 zugewandt ist. Die Folien werden zusammengeführt und mittels Rollenlamination zwischen den Rollen 30, 32 mittels Druck und Wärme zu einem Laminat 10 laminiert. Mit Hilfe einer Stanzvorrichtung 34 wird das Laminat 10 in Streifen 36 getrennt. Ein Streifen 36 ist im gezeigten Beispiel als Mehrfachnutzen ausgebildet. Aus dem Streifen 36 können im gezeigten Fall fünf Dokumente durch Ausstanzen vereinzelt werden.

Erfindungswesentlich ist, dass die dritte Folie 3 zwischen der zweiten Folie 2, welche eine Druckschicht 22 trägt, und der vierten Folie 4 angeordnet ist. Hierdurch ist im fertigen Dokument der Sicherheitsfaden 20 unter der Druckschicht 22 angeordnet.

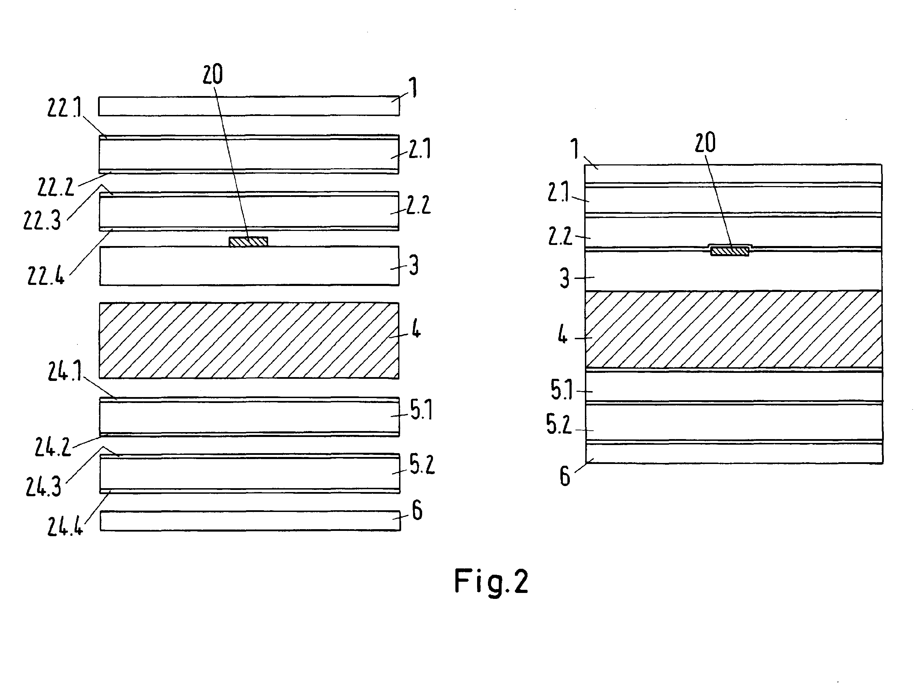

In Fig. 2 ist in schematischer Darstellung ein Folienstapel und ein aus dem Folienstapel hergestelltes Dokument dargestellt. Der Folienstapel und das Dokument weisen eine erste Folie 1 und eine sechste Folie 6 auf. Diese Folien 1, 6 weisen eine Dicke von jeweils 50 µm auf und bestehen aus transparentem PC. Ferner weisen der Folienstapel und das Dokument zwei zweite Folien 2.1, 2.2 sowie zwei fünfte Folien 5.1, 5.2 auf, welche jeweils eine Dicke von 100 µm aufweisen und aus transparentem PC bestehen. Jede dieser vier Folien 2.1, 2.2, 5.1, 5.2 weist jeweils beidseitige Druckschichten auf, wobei die erste der zweiten Folien 2.1 die Druckschichten 22.1, 22.2, die zweite der zweiten Folien 2.2 die Druckschichten 22.3, 22.4, die erste der fünften Folien 5.1 die Druckschichten 24.1, 24.2 und die zweite der fünften Folien 5.2 die Druckschichten 24.3, 24.4 aufweist. Ferner weisen der Folienstapel und das Dokument eine dritte Folie 3 auf, welche aus 100 µm dickem transparentem PC besteht. Auf die dritte Folie 3 ist mittels eines Hotmelt-Klebers ein Sicherheitsfaden 20 aufgebracht. Ferner weisen der Folienstapel und das Dokument eine vierte Folie 4 auf, welche aus opakem PC besteht und eine Dicke von 200 µm aufweist. In die vierte Folie 4 kann eine elektronische Komponente, insbesondere ein IC mit Antenne als RFID-Element integriert sein. Es ist zu erkennen, dass der Sicherheitsfaden 20 tief in das Dokument integriert werden kann und eine Entfernung des Sicherheitsfadens 20 aus dem Dokument ohne Zerstörung des Dokuments nicht möglich ist.

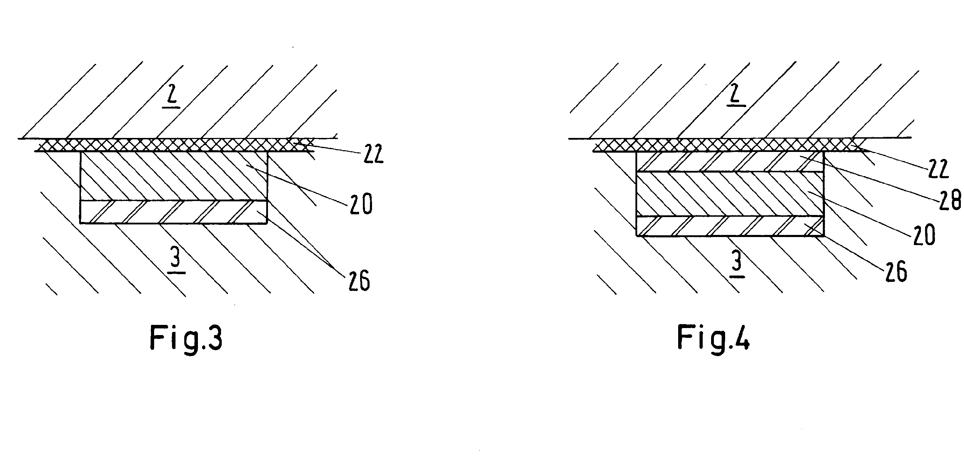

In Fig. 3 ist ein Ausschnitt aus einem erfindungsgemäßen Dokument im Querschnitt dargestellt, wobei der Ausschnitt die Grenzschicht zwischen der zweiten Folie 2 und der dritten Folie 3 zeigt. Die Grenzschicht ist durch die auf der zweiten Folie 2 angeordnete Druckschicht 22 gut zu erkennen. Der Sicherheitsfaden 20 ist mittels eines Hotmelt-Klebers 26 mit der dritten Folie 3 verbunden. Nicht dargestellt ist, dass es bei der Lamination zu einer Verformung der Grenzschicht kommt, da die Dicke des Sicherheitsfadens 20 durch Material aus der zweiten Folie 2 und der dritten Folie 3 seitlich ausgeglichen werden muss. Hierdurch kann es zu einer gewissen Verzerrung der Druckschicht 22 im Bereich des Sicherheitsfadens 20 kommen. Diese Verzerrung kann als zusätzliches Sicherheitsmerkmal genutzt werden, da somit die unmittelbare Nähe der Druckschicht 22 zum Sicherheitsfaden 20 leicht visuell überprüft werden kann.

In Fig. 4 ist ein Ausschnitt wie in Fig. 3 dargestellt. Zusätzlich weist der Sicherheitsfaden 20 in diesem Falle jedoch einen latent reaktiven Kleber 28 zwischen dem Sicherheitsfaden 20 und der Druckschicht 22 auf, welcher eine untrennbare Verbindung zwischen dem Sicherheitsfaden 20 und der Druckschicht 22 bewirkt.

## Patentansprüche

1. Verfahren zur Herstellung eines Wert- und/oder Sicherheitsdokuments, wobei das Verfahren die folgenden Verfahrensschritte umfasst:
a) Bereitstellen wenigstens einer ersten (1), wenigstens einer zweiten (2), wenigstens einer dritten (3) und wenigstens einer vierten Folie (4) in Rollenform, wobei als die wenigstens eine erste (1), die wenigstens eine zweite (2) und die wenigstens eine dritte Folie (3) transparente Folien ausgewählt werden und als wenigstens eine vierte Folie (4) eine opake Folie ausgewählt wird, wobei die wenigstens eine zweite Folie (2) mit wenigstens einer Druckschicht (22) bedruckt ist,
b) Zusammenführen der wenigstens einen ersten (1), der wenigstens einen zweiten (2), der wenigstens einen dritten (3) und der wenigstens einen vierten Folie (4) zu einem Folienstapel, wobei die wenigstens eine dritte Folie (3) zwischen der wenigstens einen zweiten (2) und der wenigstens einen vierten Folie (4) angeordnet wird,
c) Laminieren des Folienstapels mittels Druck und/oder Wärme zu einem Laminat (10) und
d) Vereinzeln des Wert- und/oder Sicherheitsdokuments aus dem Laminat (10), **dadurch gekennzeichnet, dass** vor dem Zusammenführen in Verfahrensschritt b) wenigstens ein Sicherheitsfaden (20) über einen Kleber (26) auf die wenigstens eine dritte Folie (3) aufgebracht wird.

2. Verfahren zur Herstellung eines Wert- und/oder Sicherheitsdokuments nach Anspruch 1, **dadurch gekennzeichnet, dass** vor dem Verfahrensschritt a) ein latent reaktiver Kleber (28) auf den auf der wenigstens einen dritten Folie (3) aufgeklebten Sicherheitsfaden (20) aufgedruckt wird.

3. Verfahren zur Herstellung eines Wert- und/oder Sicherheitsdokuments nach Anspruch 2, **dadurch gekennzeichnet, dass** die wenigstens eine Druckschicht (22) der wenigstens einen zweiten Folie (2) beim Zusammenführen der Folien im Verfahrensschritt b) mit dem latent reaktiven Kleber (28) auf dem Sicherheitsfaden (20) in Kontakt gebracht wird.

4. Verfahren zur Herstellung eines Wert- und/oder Sicherheitsdokuments nach einem der Ansprüche 2 und 3, **dadurch gekennzeichnet, dass** nach dem Verfahrensschritt b) der latent reaktive Kleber (28) mittels Bestrahlung mit Strahlung im UV-Bereich, im sichtbaren Spektralbereich und/oder im IR-Bereich und/oder durch Erwärmung vernetzt wird.

5. Wert- und/oder Sicherheitsdokument umfassend ein Laminat aus wenigstens einer ersten (1), wenigstens einer zweiten (2), wenigstens einer dritten (3) und wenigstens einer vierten Folie (4), wobei die wenigstens eine erste (1), wenigstens eine zweite (2) und wenigstens eine dritte Folie (3) transparent sind, die wenigstens eine vierte Folie (4) opak ist und die wenigstens eine dritte Folie (3) zwischen der wenigstens einen zweiten (2) und der wenigstens einen vierten Folie (4) angeordnet ist und die wenigstens eine zweite Folie (2) wenigstens eine Druckschicht (22) aufweist, **dadurch gekennzeichnet, dass** zwischen der wenigstens einen zweiten (2) und der wenigstens einen dritten Folie (3) ein Sicherheitsfaden (20) angeordnet ist und dass sich zwischen der wenigstens einen dritten Folie (3) und dem Sicherheitsfaden (20) eine Kleber-Schicht (26) befindet.

6. Wert- und/oder Sicherheitsdokument nach Anspruch 5, **dadurch gekennzeichnet, dass** sich zwischen der wenigstens einen zweiten Folie (2) und dem Sicherheitsfaden (20) ein reaktiv vernetzter Kleber (28) befindet.

7. Wert- und/oder Sicherheitsdokument nach einem der Ansprüche 5 und 6, **dadurch gekennzeichnet, dass** die wenigstens eine auf der wenigstens einen zweiten Folie (2) angeordnete Druckschicht (22) auf der dem Sicherheitsfaden (20) zugewandten Seite angeordnet ist.

8. Wert- und/oder Sicherheitsdokument nach einem der Ansprüche 5 bis 7, **dadurch gekennzeichnet, dass** in den Sicherheitsfaden (20) eine individualisierte und/oder personalisierte Information eingebracht ist.

## Claims

1. Method for producing a value and/or security document, wherein the method comprises the following method steps of:
a) providing at least one first sheet (1), at least one second sheet (2), at least one third sheet (3), and at least one fourth sheet (4) in roll form, wherein, as the at least one first sheet (1), the at least one second sheet (2), and the at least one third sheet (3), transparent sheets are selected, and as the at least one fourth sheet (4) an opaque sheet is selected, wherein the at least one second sheet (2) is printed with at least one print layer (22),
b) bringing together the at least one first sheet (1), the at least one second sheet (2), the at least one third sheet (3), and the at least one fourth sheet (4) to form a sheet stack, wherein the at least one third sheet (3) is arranged between the at least one second (2) and the at least one fourth sheet (4),
c) laminating the sheet stack by means of pressure and/or heat to form a laminate (10) and
d) separating the value and/or security document from the laminate (10), **characterised in that**, before the bringing together in method step b), at least one security thread (20) is introduced by means of an adhesive (26) onto the at least one third sheet (3).

2. Method for producing a value and/or security document according to claim 1, **characterised in that**, before the method step a), a latent reactive adhesive (28) is printed onto the security thread (20) adhesively bonded onto the at least one third sheet (3).

3. Method for producing a value and/or security document according to claim 2, **characterised in that**, at the bringing together of the sheets in method step b), the at least one print layer (22) of the at least one second sheet (2) is brought into contact with the latent reactive adhesive (28) on the security thread (20).

4. Method for producing a value and/or security document according to any one of claims 2 and 3, **characterised in that**, after the method step b), the latent reactive adhesive (28) is crosslinked by irradiation by means of radiation in the UV range, in the visible spectrum range, and/or in the IR range, and/or by heating.

5. Value and/or security document, comprising a laminate from at least one first sheet (1), at least one second sheet (2), at least one third sheet (3), and at least one fourth sheet (4), wherein the at least one first sheet (1), the at least one second sheet (2), and the at least one third sheet (3) are transparent, the at least one fourth sheet (4) is opaque, and the at least one third sheet (3) is arranged between the at least one second sheet (2) and the at least one fourth sheet (4), and the at least one second sheet (2) comprises at least one print layer (22), **characterised in that** a security thread (20) is arranged between the at least one second (2) and the at least one third sheet (3), and that an adhesive layer (26) is located between the at least one third sheet (3) and the security thread (20).

6. Value and/or security document according to claim 5, **characterised in that** a reactive crosslinked adhesive (28) is located between the at least one second sheet (2) and the security thread (20).

7. Value and/or security document according to any one of claims 5 and 6, **characterised in that** the at least one print layer (22) arranged on the at least one second sheet (2) is arranged on the side facing the security thread (20).

8. Value and/or security document according to any one of claims 5 to 7, **characterised in that** an individualized and/or personalized item of information is introduced into the security thread (20).

## Revendications

1. Procédé servant à fabriquer un document de valeur et/ou de sécurité, sachant que le procédé comprend les étapes de procédé qui suivent consistant à :
a) fournir au moins un premier film (1), au moins un deuxième film (2), au moins un troisième film (3) et au moins un quatrième film (4) sous forme de rouleaux, sachant qu'on choisit, en tant que le premier film (1) au moins au nombre de un, le deuxième film (2) au moins au nombre de un et le troisième film (3) au moins au nombre de un, des films transparents et qu'on choisit, en tant que quatrième film (4) au moins au nombre de un, un film opaque, sachant qu'au moins un deuxième film (2) est imprimé d'au moins une couche d'impression (22) ;
b) assembler le premier film (1) au moins au nombre de un, le deuxième film (2) au moins au nombre de un, le troisième film (3) au moins au nombre de un et le quatrième film (4) au moins au nombre de un pour obtenir un empilement de films, sachant que le troisième film (3) au moins au nombre de un est disposé entre le deuxième film (2) au moins au nombre de un et le quatrième film (4) au moins au nombre de un ;
c) stratifier l'empilement de films au moyen d'une pression et/ou de chaleur pour obtenir un stratifié (10) ; et
d) séparer le document de valeur et/ou de sécurité du stratifié (10),
**caractérisé en ce qu'**on applique, avant l'assemblage effectué à l'étape de procédé b), au moins un fil de sécurité (20), par l'application d'une colle (26), sur le troisième film (3) au moins au nombre de un.

2. Procédé servant à fabriquer un document de valeur et/ou de sécurité selon la revendication 1, **caractérisé en ce qu'**on imprime, avant l'étape de procédé a), une colle à réactivité latente (28) sur le fil de sécurité (20) collé sur le troisième film (3) au moins au nombre de un.

3. Procédé servant à fabriquer un document de valeur et/ou de sécurité selon la revendication 2, **caractérisé en ce que** la couche de pression (22) au moins au nombre de une du deuxième film (2) au moins au nombre de un est amenée en contact avec la colle à réactivité latente (28) sur le fil de sécurité (20) lors de l'assemblage des films réalisé à l'étape de procédé b).

4. Procédé servant à fabriquer un document de valeur et/ou de sécurité selon l'une quelconque des revendications 2 et 3, **caractérisé en ce que** la colle à réactivité latente (28) est réticulée, après l'étape de procédé b), au moyen d'une exposition à un rayonnement relevant du domaine des UV, dans le domaine spectral visible et/ou dans le domaine des IR et/ou par réchauffement.

5. Document de valeur et/ou de sécurité, comprenant un stratifié constitué d'au moins un premier film (1), d'au moins d'un deuxième film (2), d'au moins d'un troisième film (3) et d'au moins d'un quatrième film (4), sachant que le premier film (1) au moins au nombre de un, le deuxième film (2) au moins au nombre de un et le troisième film (3) au moins au nombre de un sont transparents, que le quatrième film (4) au moins de nombre de un est opaque et que le troisième film (3) au moins au nombre de un est disposé entre le deuxième film (2) au moins au nombre de un et le quatrième film (4) au moins au nombre de un et que le deuxième film (2) au moins au nombre de un présente au moins une couche d'impression (22), **caractérisé en ce qu'**un fil de sécurité (20) est disposé entre le deuxième film (2) au moins au nombre de un et le troisième film (3) au moins au nombre de un, et **en ce qu'**une couche de colle (26) se trouve entre le troisième film (3) au moins au nombre de un et le fil de sécurité (20).

6. Document de valeur et/ou de sécurité selon la revendication 5, **caractérisé en ce qu'**une colle réticulée par réaction (28) se trouve entre le deuxième film (2) au moins au nombre de un et le fil de sécurité (20).

7. Document de valeur et/ou de sécurité selon l'une quelconque des revendications 5 et 6, **caractérisé en ce que** la couche d'impression (22) au moins au nombre de une disposée sur le deuxième film (2) au moins au nombre de un est disposée sur le côté tourné vers le fil de sécurité (20).

8. Document de valeur et/ou de sécurité selon l'une quelconque des revendications 5 à 7, **caractérisé en ce qu'**une information individualisée et/ou personnalisée est intégrée dans le fil de sécurité (20).
